(19) Europäisches Patentamt
European Patent Office
Office européen des brevets

(11) **EP 4 036 909 B1**

(12) **EUROPÄISCHE PATENTSCHRIFT**

(45) Veröffentlichungstag und Bekanntmachung des Hinweises auf die Patenterteilung:
**04.12.2024 Patentblatt 2024/49**

(21) Anmeldenummer: **21154025.7**

(22) Anmeldetag: **28.01.2021**

(51) Internationale Patentklassifikation (IPC):
**G10L 15/06** *(2013.01)* **G10L 15/32** *(2013.01)*
**G10L 15/18** *(2013.01)*

(52) Gemeinsame Patentklassifikation (CPC):
**G10L 15/063; G10L 15/1822; G10L 15/32;**
G06F 40/279; G06F 40/30; G10L 2015/0636

(54) **VERFAHREN UND DATENGENERATOR ZUM ERZEUGEN EINES BASISDATENSATZES FÜR EINEN VIRTUELLEN ASSISTENTEN**

METHOD AND DATA GENERATOR FOR GENERATING A BASE DATA SET FOR A VIRTUAL ASSISTANT

PROCÉDÉ ET GÉNÉRATEUR DE DONNÉES PERMETTANT DE GÉNÉRER UN ENSEMBLE DE DONNÉES DE BASE POUR UN ASSISTANT VIRTUEL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**03.08.2022 Patentblatt 2022/31**

(73) Patentinhaber: **Deutsche Telekom AG**
**53113 Bonn (DE)**

(72) Erfinder:
- **Minow, Jascha**
  **64625 Bensheim (DE)**
- **Jahn, Carl**
  **65191 Wiesbaden (DE)**
- **Platschek, Martin Michael**
  **12557 Berlin (DE)**
- **El Mallouki, Said**
  **56329 St. Goar (DE)**

(74) Vertreter: **Braun-Dullaeus Pannen Emmerling Patent- & Rechtsanwaltspartnerschaft mbB Platz der Ideen 2 40476 Düsseldorf (DE)**

(56) Entgegenhaltungen:
- **DILEK HAKKANI-TÜR ET AL: "An active approach to spoken language processing", ACM TRANSACTIONS ON SPEECH AND LANGUAGE PROCESSING (TSLP), ASSOCIATION FOR COMPUTING MACHINERY, INC, NEW YORK, USA, vol. 3, no. 3, 1 October 2006 (2006-10-01), pages 1 - 31, XP058184508, ISSN: 1550-4875, DOI: 10.1145/1177055.1177056**
- **ARGAMON-ENGELSON S ET AL: "Committee-Based Sample Selection for Probabilistic Classifiers", ARXIV.ORG, CORNELL UNIVERSITY LIBRARY, 201 OLIN LIBRARY CORNELL UNIVERSITY ITHACA, NY 14853, 1 June 2011 (2011-06-01), XP080511688, DOI: 10.1613/JAIR.612**
- **TANNO RYUTARO ET AL: "Learning From Noisy Labels by Regularized Estimation of Annotator Confusion", 2019 IEEE/CVF CONFERENCE ON COMPUTER VISION AND PATTERN RECOGNITION (CVPR), IEEE, 15 June 2019 (2019-06-15), pages 11236 - 11245, XP033686493, DOI: 10.1109/CVPR.2019.01150**

**Beschreibung**

Die Erfindung betrifft das technische Gebiet von virtuellen Assistenten an welche Nutzer Anfragen richten können, bzw. mit denen Nutzer kommunizieren können. Insbesondere betrifft die Erfindung die Erzeugung eines Basisdatensatzes, der diesen virtuellen Assistenten für ihre Funktionalitäten zu Grunde liegt. Zudem betrifft die Erfindung die Verwendung eines solchen Basisdatensatzes. Dieser Basisdatensatz wird auf dem technischen Gebiet der virtuellen Assistenten auch als Ground-Truth Datensatz bezeichnet.

Virtuelle Assistenten finden immer mehr Einzug in das tägliche Leben von Nutzern und werden daher mit immer vielfältigeren Anfragen konfrontiert. Dabei kann der Nutzer mit verschiedenen Interfaces / "Touch Points" der virtuellen Assistenten kommunizieren. Mögliche "Touch Points" sind ein intelligenter Lautsprecher, ein virtueller Assistent implementiert auf einem Smartphone, ein "Support Chat" in einem Browser und/oder eine automatisierte Telefonhotline. Die Assistenten und insbesondere deren spezifischen Modelle für die Spracherkennung (beispielsweise "Speech-to-Text" oder "Natural Language Understanding") werden beständig weiterentwickelt. Für diese Weiterentwicklungen ist es von Bedeutung, Änderungen bevorzugt automatisiert zu testen, um festzustellen, ob der weiterentwickelte virtueller Assistent besser funktioniert als der alte virtuelle Assistent und neue Anfragen der Nutzer erfolgreich bearbeiten kann.

Zweckmäßigerweise werden diese Tests basierend auf einem bereits bestehenden Datensatz von "Äußerungen", die auch als "Utterances" bezeichnet werden, durchgeführt. Bei solchen Äußerungen kann es sich also um gesprochene Sprache, also Audiosignale, aber auch um Äußerungen in Textform handeln. Dieser bereits bestehende Datensatz ist wohl definiert und ist aus einer Menge von Äußerungen ausgebildet, bei denen zuvor festgelegt wurde, wie die Antworten des virtuellen Assistenten hinsichtlich der Ebenen "Intent" und "Entity" auszufallen haben. Der Ground-Truth Datensatz ist sozusagen ein Basiswert von Äußerungen, die das System im Idealfall 100 % richtig erkennen muss. Sollen neue spezifische Modelle in den virtuellen Assistenten integriert werden, werden diese Modelle anhand eines entsprechend angepassten Ground-Truth Datensatzes trainiert. In diesem Sinne ist also ein "neuer" Ground-Truth Datensatzes Basis für neue Funktionen des virtuellen Assistenten.

In den entsprechenden Fachkreisen ist der Begriff Entity bekannt. Wenn im Rahmen dieses Textes gelegentlich der deutsche Begriff Entität verwendet wird, ergeben sich hieraus keine Unterschiede in der Bedeutung.

"Intents" sind im Endeffekt die Aktionen oder Aufgaben, die ein virtueller Assistent für Nutzer erledigen kann. Es handelt sich dabei quasi um Kategorien, in welche beispielsweise Nachrichten oder E-Mails von einem KI-Modell kategorisiert werden. Ein Intent sollte dabei immer das Ziel bzw. die Intension des Nutzers widerspiegeln.

Anfragen können neben einem Intent auch weitere Infos beinhalten, die als sog. Entität extrahiert werden können. In einer Anfrage wie "Buche einen Flug nach New York" könnte New York als Entity "Destination" extrahiert werden, sodass ein virtueller Assistent diese Information bereits kennt und verarbeiten kann.

In diesem Sinne bilden ein Intent und eine Entität quasi eine hierarchische Struktur auf der Anfrage in dem Sinne aus, dass der Intent der Entität übergeordnet ist. In dem vorgenannten Beispiel würde das bedeuten, dass, wenn der virtuelle Sprachassistenten zugleich eine Anfrage des Nutzers nur aufgrund der Entität bearbeitet, nicht klar ist, ob der Nutzer einen Flug nach New York buchen möchte oder einer Reiseroute nach New York angegeben haben möchte.

Bei der Erstellung von Ground-Truth Datensätzen ergibt sich aber das Problem, dass es von elementarer Wichtigkeit ist, den Ground-Truth Datensatz möglichst nur mit richtigen und korrekten Daten zu befüllen und gleichzeitig sicherzustellen, dass diese Daten nicht doppelt vorhanden sind oder sich sogar selbst widersprechen.

Aktuelle Lösungen setzen hierbei noch gänzlich auf entsprechend ausgebildete Mitarbeiter, die als Editoren oder Annotatoren bezeichnet werden, um Anfragen von Nutzern für den virtuellen Assistenten zu kategorisieren und annotieren. Das Kategorisieren und Annotieren dient dazu, die Nutzeranfragen zusammen mit weiteren wichtigen Informationen, beispielsweise die Identifizierung von Intent und Entitäten innerhalb der Anfrage, innerhalb des Ground-Truth Datensatzes korrekt "einzuordnen". Hierbei werden die Anfragen von den Editoren bearbeitet und annotiert, befindet sich unter diesen Anfragen eine Äußerung, die noch nicht in dem Ground-Truth Datensatz vorhanden ist, wird diese nach Absprache im Team zu dem Ground-Truth Datensatz hinzugefügt. Die Absprache im Team findet deshalb statt, um Fehler zu vermeiden und eine korrekte Einordnung sicherzustellen.

Dadurch, dass "reale" Editoren die manuelle Bearbeitung der Nutzeranfragen durchführen, ergibt sich das Problem, dass die Anfragen die bearbeitet werden können mit der Größe dieser Teams bzw. der Anzahl der Teams skalieren. Typischerweise kann ein Team von 2-3 Personen nur 3000 Anfragen pro Woche bearbeiten, wobei aktuell ca. 420.000 Anfragen pro Woche an den "Hallo Magenta" Assistenten der Deutschen Telekom gestellt werden. Dies hat zur Folge, dass eine sehr große Anzahl von Anfragen für die Bearbeitung nicht berücksichtigt werden kann. Ein weiteres Problem ergibt sich hinsichtlich des Datenschutzes, da die realen Editoren bei der Bearbeitung der Rückfragen Rückschlüsse auf die Nutzer ziehen können.

Auch eine "einfache" Automatisierung bietet diesbezüglich keine Abhilfe. Solch eine einfache Automatisierung kann dadurch realisiert sein, dass nach Schlagwörtern gesucht wird, diesen Schlagwörter Intents oder Entitäten zugeordnet werden und dann zu dem Ground-Truth Datensatz hinzugefügt werden. Wird beispielsweise das Schlagwort "als nächstes " innerhalb der Anfrage aufgefunden, würde diese einfache Automatisierung aber dazu führen, dass die Anfrage beispielsweise sowohl einer Audio-Wiedergabe "Spiele als nächstes folgenden Titel ab" als auch beispielsweise der Erstellung eines Kalendereintrags "Setze als nächstes folgenden Termin an" zugeordnet wird. Hieraus folgt, dass die Ground-Truth Datenbank zu viele Anfragen aufweisen würde, die auch nicht exakt zugeordnet sind und die Relevanz der ursprünglichen Daten nicht widerspiegeln. In der Folge wird vieles Falsche als richtig erkannt, was in der Folge bei der Erstellung des virtuellen Assistenten zu dem Problem der Überanpassung, dem sogenannten Overfitting, führen kann.

Zwar ist es wichtig einen ausreichend großen Ground-Truth Datensatz für das Trainieren des virtuellen Assistenten vorzuhalten, jedoch muss diesbezüglich ein optimaler Kompromiss zwischen der Größe des Ground-Truth Datensatzes und der vorstehend erläuterten Problematik des Overfittings gefunden werden. Letztlich bedeutet dies, dass nicht alle möglichen Varianten eine Anfrage in dem Ground-Truth Datensatz aufgenommen sein sollen, mithin sollen aber jedes falls jedenfalls die relevanten Varianten eine Anfrage bevorzugt in den Ground-Truth Datensatz aufgenommen werden.

DILEK HAKKANI-TUR ET AL: "An active approach to spoken language processing", ACM TRANSACTIONS ON SPEECH AND LANGUAGE PROCESSING (TSLP), ASSOCIATION FOR COMPUTING MACHINERY, INC, NEW YORK, USA, Bd. 3, Nr. 3, 1. Oktober 2006 (2006-10-01), Seiten 1-31, XP058184508, ISSN: 1550-4875, DOI: 10.1145/11770551177056; zeigt einen aktiven Ansatz, bei dem das System für einen virtuellen Sprachassistenten selbst seine eigenen Trainingsdaten auswählt, sich selbst bewertet und bei Bedarf neu trainiert.

ARGAMON-ENGELSON S ET AL: "Committee-Based Sample Selection for Probabilistic Classifiers", ARXIV.ORG, CORNELL UNIVERSITY LIBRARY, 201 OLIN LIBRARY CORNELL UNIVERSITY ITHACA, NY 14853, 1. Juni 2011 (2011-06-01), XP080511688, DOI:10.1613/JAIR.612; untersucht Methoden zur Reduzierung der Annotierungskosten durch die Auswahl von Beispielen. Bei diesem Ansatz untersucht ein Lernprogramm während des Trainings viele nicht-annotierte Beispiele und wählt für die Annotierung nur diejenigen aus, die in jeder Phase am informativsten sind. Dadurch wird vermieden, dass Beispiele, die wenig neue Informationen liefern, redundant beschriftet werden.

Es ist daher die Aufgabe der Erfindung, Techniken bereitzustellen, die es ermöglichen einen Ground-Truth Datensatz zum Trainieren eines virtuellen Assistenten effektiv und mit hoher Qualität zu erstellen.

Gelöst wird diese Aufgabe mit den Merkmalen der unabhängigen Ansprüche.

Die Merkmale der im Folgenden beschriebenen verschiedenen Aspekte der Erfindung bzw. der verschiedenen Ausführungsbeispiele sind miteinander kombinierbar, sofern dies nicht explizit ausgeschlossen ist oder sich technisch zwingend ausschließt.

Erfindungsgemäß ist ein Verfahren zum Erzeugen eines Ground-Truth Datensatzes für einen virtuellen Assistenten angegeben, wobei die Elemente des Ground-Truth Datensatzes mögliche Nutzeranfragen an den virtuellen Assistenten umfassen, wobei das Verfahren zumindest teilweise automatisiert auf einer Rechnereinheit ausführbar ist und die folgenden Schritte umfasst:

- Bereitstellen von getätigten Anfragen von Nutzer an die Recheneinheit, wobei es sich um Anfragen für den virtuellen Assistenten handelt;

  o diese Anfragen werden von möglichst vielen Nutzern erfasst und insbesondere zentral in einer Datenbank eines Servers hinterlegt; bevorzugt wird der Server von dem Unternehmen bereitgestellt, das den virtuellen Assistenten anbietet;

- Analysieren der Anfragen im Hinblick auf eine Eignung für eine Aufnahme in die Ground-Truth Daten; wobei die Analyse von zumindest zwei virtuellen Editoren vorgenommen wird, wobei jeder der virtuellen Editoren basierend auf den Eingaben eines einzelnen menschlichen Editors trainiert wurde und für jede Anfrage ein eigenes Analyseergebnis erstellt;

  o eine Anfrage ist insbesondere dann für die Aufnahme in die Ground-Truth Daten geeignet, wenn es sich hierbei um "korrekte" Daten handelt, die nicht doppelt vorhanden sind oder gar sich selbst widersprechen; bei der Analyse kann beispielsweise bestimmt werden, ob die Anfrage einen bestimmten Intent und/oder eine Entität aufweist, die einer Funktionalität entspricht, die durch den virtuellen Assistenten bereitgestellt werden soll, insbesondere umfasst die Analyse auch die Klassifizierung, um welchen Intent und/oder um welche Entität es sich handelt; hierbei handelt sich bei den virtuellen Editoren um Prozesse die automatisiert auf der Rechnereinheit ablaufen und die Anfragen automatisiert wie reale Editoren bewerten, respektive klassifizieren und annotieren.

- Implementieren von Mitteln zur Bewertung der Analyseergebnisse auf der Recheneinheit, wobei die Mittel zur Bewertung einen Wert TS berechnen der eine Wahrscheinlichkeit repräsentiert, dass die Anfrage für den Ground-Truth Datensatz geeignet ist, wobei die Berechnung basierend auf den Analyseergebnissen der zumindest zwei virtuellen Editoren für die jeweilige Anfrage durchgeführt wird;

o wurde beispielsweise eine bestimmte Anfrage von allen Editoren übereinstimmend einem bestimmten Intent zugeordnet, ist es naheliegend, dass diese Anfrage dem Ground-Truth Datensatz hinzugefügt wird. Probleme ergeben sich hinsichtlich dieser Beurteilung aber insbesondere, wenn keine vollständige Übereinstimmung zwischen den Editoren herrscht. Aus diesem Grund ist es zweckmäßig eine entsprechende Metrik TS zu berechnen, die eine Beurteilung der Qualität der Anfrage ermöglicht. Hierbei repräsentiert der Wert TS zwar eine Wahrscheinlichkeit, was aber nicht bedeutet, dass wenn der Wert TS beispielsweise 0,5 annimmt, dass dies eine Wahrscheinlichkeit von 50 % entspricht, dass die Anfrage in dem Ground-Truth Datensatz aufgenommen werden kann. Ein höherer Zahlenwert TS indiziert lediglich eine höhere Wahrscheinlichkeit, dass die Anfrage für den Ground-Truth Datensatz geeignet ist.

- Vergleichen des berechneten Wertes TS mit einem vordefinierten Schwellenwert TH;

  o hierbei wird der vordefinierten Schwellenwert TH so gewählt, dass eine Eignung für den Ground-Truth Datensatz angenommen wird, falls TH > TS ist. Der vordefinierte TH kann für Intents/Entities unterschiedlich definiert sein.

- Hinzufügen der Anfrage in den Ground-Truth Datensatz, wenn der berechnete Wert TS größer ist als der Schwellenwert TH.

Dies bietet also den Vorteil, dass die Erstellung des Ground-Truth Datensatzes nicht mehr mit der Größe eines Teams von realen Editoren skaliert, sondern automatisiert durchgeführt werden kann und gleichzeitig eine hohe Qualität des Datensatzes sichergestellt werden kann. Diese hohe Qualität wird dadurch sichergestellt, dass das Verfahren der Vorgehensweise von realen Editoren und insbesondere Teams von realen Editoren nachempfunden ist. Auf diese Weise wird auch das Problem des Overfittings vermieden, wie es bei einfachen Klassifizierungsalgorithmen auftreten würde. Dies bietet den Vorteil, dass eine deutlich höhere Anzahl von Anfragen hinsichtlich ihrer Eignung für den Ground-Truth Datensatz bewertet werden kann. Ein wesentlicher Grundgedanke der Erfindung ist es hierbei, dass hierfür zumindest zwei virtuelle Editoren verwendet werden. Dies ist ebenfalls der Tatsache nachempfunden, dass selbst bei realen Editoren ein Team von Editoren zum Einsatz kommt, um die Qualität des Datensatzes hochzuhalten. Es erweist sich hierbei als vorteilhaft, wenn die virtuellen Editoren unterschiedliche Eigenschaften aufweisen, wie das auch bei realen Editoren der Fall ist. Würden die virtuellen Editoren auf exakt gleichen Modellen beruhen, würden diese auch identisch die gleichen Fehler bei der Kategorisierung und Annotierung begehen.

Zweckmäßigerweise werden die Anfragen aus einer Historie von realen Nutzeranfragen entnommen, die in einer Datenbank hinterlegt sind.

Dies bietet den Vorteil, dass nur solche Anfragen verwendet werden, die tatsächlich für die Nutzer von Relevanz und von Interesse bezüglich der Funktionalität des virtuellen Assistenten sind.

In einem bevorzugten Ausführungsbeispiel sind Mittel zum Filtern von Anfragen auf der Recheneinheit und/oder einem Server implementiert, wobei die bereitgestellten Anfragen eine gefilterte Teilmenge einer Gesamtmenge von realen Nutzeranfragen sind.

Dies bietet den Vorteil, dass das Verfahren deutlich effizienter wird, wenn Anfragen aus der Gesamtmenge von realen Nutzeranfragen herausgefiltert werden, die völlig offensichtlich "a priori" keine Relevanz für den Ground-Truth Datensatz aufweisen. Solche völlig offensichtlich irrelevanten Anfragen können effektiv mit einfachen Algorithmen herausgefiltert werden.

Vorzugsweise filtern die Mittel zum Filtern Anfragen heraus, denen folgende Tag, also Kennzeichnen oder Merkmale, zugeordnet wurden: unzureichende Qualität des Audiosignals der Anfrage, die Länge des Audiosignals der Anfrage ist zu lang oder zu kurz, und/oder der Nutzer hat keine Antwort gegeben.

Dies bietet den Vorteil, dass der eigentlichen Analyse und Bewertung nur solche Audiosignale der Anfragen zugeführt werden, die zur weiteren Bearbeitung auch mit hoher Wahrscheinlichkeit brauchbar sind. Bei einer unzureichenden Qualität des Audiosignals der Anfrage besteht nämlich die Gefahr, dass diese gar keinem Intent oder einem falschen Intent zugeordnet wird. Ist die Länge des Audiosignals zu kurz, kann davon ausgegangen werden, dass es sich gar nicht um eine Anfrage handelt, wobei bei einer zu langen Anfrage davon ausgegangen werden kann, dass der Nutzer den virtuellen Sprachassistenten versehentlich aktiv geschaltet hat und die Worte seines Autosignals gar nicht an den virtuellen Sprachassistenten gerichtet sind. Bevorzugt werden diese Tags, also die Merkmale, durch den virtuellen Sprachassistenten automatisiert schon bei der Eingabe der Anfrage generiert und zugeordnet. Beispielsweise kann der Nutzer durch ein Mikrofon eines Endgeräts, auf dem der virtuelle Assistent installiert ist, die Anfrage mittels eines Autosignals an den virtuellen Sprachassistenten stellen, wobei dieser bei einer Länge des Autosignals von beispielsweise unter 1 Sekunde, automatisiert den Tag "Audiosignal zu kurz" generiert. Zusammen mit diesem Tag kann das Audiosignal dann in der zentralen Datenbank hinterlegt werden. Eine weitere Möglichkeit ist, dass ein solche markiertes Audiosignal überhaupt nicht an die zentrale Datenbank weitergeleitet, sondern direkt von dem Endgerät verworfen wird. Dies bietet den Vorteil, dass der Datentransfer im Netzwerk reduziert wird.

Zudem berücksichtigen die Mittel zum Filtern aktuell Anfragen, die mit dem Tag "Sucess" (Erfolgreich) markiert wurden auch nur nachrangig. Zwar handelt es sich bei als erfolgreich markierten Autosignalen um valide Anfragen an den virtuellen Assistenten, allerdings an solche, die eben mit einer hohen Wahrscheinlichkeit schon in dem Ground-Truth Datensatz vorhanden sind. Allerdings eignen sich die als erfolgreich markierten Audiosignale besonders gut, um eine Künstliche Intelligenz als virtuellen Editor zu trainieren. Weiterhin werden insbesondere "Not-Success" Anfragen klassifiziert, um zu analysieren, warum das System nicht richtig reagiert hat. Beispielsweise, weil eine Funktion nicht unterstützt wird oder aber eine Anfrage für einen bestehenden Intent ungeeignet ist.

Gemäß einem bevorzugten Ausführungsbeispiel basieren die Anfragen auf einer Texteingabe oder einer Spracheingabe.

Dies bietet den Vorteil, dass der virtuelle Assistent flexibel als Sprachassistenten oder textbasierter Assistent eingesetzt werden kann. Der textbasierte Assistent kann Nutzern beispielsweise in Browsern bereitgestellt und mittels Tastatureingabe angefragt werden, wohingegen der virtuelle Sprachassistenten bevorzugt in intelligenten Lautsprechern oder Nutzerendgeräten installiert ist, um bequem Anfragen an den virtuellen Assistenten per Audiosignal stellen zu können.

Bevorzugt werden der Schwellenwert und/oder eine Anzahl der virtuellen Editoren durch entsprechend eingerichtete APIs verändert.

Eine Veränderung der Anzahl der virtuellen Editoren bietet den Vorteil, dass die Leistungsfähigkeit des Systems, also die Geschwindigkeit der Abarbeitung der Anfragen der Nutzer, flexibel skaliert werden kann. Je mehr virtuelle Editoren eingesetzt werden, desto mehr Anfragen können bearbeitet werden. Auch für die virtuellen Editoren gilt, dass zumindest zwei virtuelle Editoren jeweils eine Gruppe ausbilden, wobei jede Gruppe identische Anfragen bearbeitet. Sollen also mehr Anfragen pro Zeit bearbeitet werden, müssen mehr Gruppen an virtuellen Editoren gebildet werden. Die Anzahl der Editoren innerhalb der Gruppen zu erhöhen, bietet den Vorteil, dass statistisch signifikantere Ergebnisse erzielt werden, weil dann falsch markierte Anfragen durch einen einzelnen virtuellen Editor nicht mehr so stark ins Gewicht fallen. Bevorzugt weist eine Gruppe zumindest fünf virtuelle Editoren auf. Eine Veränderung der Schwellenwerte bietet den Vorteil, dass flexibel variiert werden kann, wie viele Anfragen dem Ground-Truth Datensatz hinzugefügt werden und welche Qualität diese Anfragen aufweisen. Wird der Schwellenwert erhöht, werden weniger Anfragen dem Ground-Truth Datensatz hinzugefügt, diese weisen allerdings eine höhere Qualität auf.

In einem bevorzugten Ausführungsbeispiel werden die Anfragen zusätzlich von realen Editoren im Hinblick auf eine Eignung für eine Aufnahme in die Ground-Truth Daten analysiert. Dies bietet den Vorteil, dass hierdurch dem automatisierten Verfahren ein zusätzlicher Qualitätsschub verliehen werden kann, insbesondere dann, wenn die virtuellen Editoren mit neuen Situation konfrontiert werden. Die realen Editoren werden dann zusammen mit den virtuellen Editoren in einer Gruppe zusammengefasst. Beispielsweise kann eine Kombination von realen Editoren und virtuellen Editoren den vorteilhaften synergetischen Effekt haben, dass die virtuellen Editoren Flüchtigkeitsfehler der Menschen ausgleichen, wohingegen die realen Editoren besser auf neue Gegebenheiten reagieren können. Ein weiterer Vorteil ist, dass die von den realen Editoren bearbeiteten Anfragen verwendet werden können, um die Künstliche Intelligenz der virtuellen Editoren zu trainieren. Damit die realen Editoren die Anfragen entsprechend bearbeiten können, werden Ihnen entsprechend Eingabe- und Ausgabemittel (Bildschirm und Tastatur) zur Verfügung gestellt, sodass sie über einen entsprechenden Datenstrom mit der Rechnereinheit kommunizieren können.

Erfindungsgemäß werden die virtuellen Editoren durch eine künstliche Intelligenz realisiert, die auf Basis der Eingabe realer Editoren trainiert wurde, insbesondere wird ein einzelner virtueller Editor basierend auf den Eingaben eines einzelnen realen Editors trainiert. Hierbei werden insbesondere maschinelle Lernverfahren wie beispielsweise Deep Learning und/oder Supervised Training verwendet. Der virtuelle Editor kann auch einer Auswahl von bewerteten Utterances für eine spezielle Domain trainiert werden. Somit könnte spezielle virtuellen Editor für eine TV oder nur für die Smarthome Domäne geben. Andere virtuelle Editoren sind nicht so spezialisiert und könnten die anderen Domänen/Kategorien annotieren. Daraus ergibt sich der Vorteil, dass die virtuellen Editoren speziell für den jeweiligen Einsatz mit Spezialwissen trainiert werden können.

Dies bietet den Vorteil, dass eine effiziente Möglichkeit geschaffen wird virtuelle Editoren zu generieren, die möglichst gut ihren menschlichen Vorbildern entsprechen und sich auch hinreichend unterscheiden.

Die Variabilität dieser virtuellen Editoren kann zusätzlich dadurch erhöht werden, indem eine künstliche Intelligenz der virtuellen Editoren mit verschiedenen Modellen und/oder verschiedenen Parametern trainiert wird. Aus statistischen Gründen ist es vorteilhaft, virtuelle Editoren bereitzustellen, die sich hinsichtlich ihrer Eigenschaften hinreichend unterscheiden. Dies ermöglicht, dass "Fehler" die von einem virtuellen Editor begangen werden, durch einen anderen virtuellen Editor ausgeglichen werden. Bei der automatischen Bewertung können für die unterschiedlichen Maschine-Learning Modelle prinzipiell eigene Confidencen erstellt werden, um hieraus wieder eine Gesamt-Confidence zu bilden. Wenn die Gesamt-Confidence einen gewissen Schwellenwert übersteigt, wird die Anfrage in dem Ground-Truth Datensatz gespeichert und die Modelle werden mithilfe von supervised Training erneut trainiert, um die Erkennung noch weiter zu verbessern.

Die virtuellen Editoren können, insbesondere, wenn ein neuer Ground-Truth Datensatz erzeugt wurde, regelmäßig upgedatet werden.

Dies bietet den Vorteil, dass die virtuellen Editoren auch hinsichtlich neuer Anfragen bzw. hinsichtlich neuer Funktionalitäten des virtuellen Assistenten die Anfragen korrekt analysieren und bewerten können.

Bevorzugt umfassen die Mittel zur Bewertung der Analyseergebnisse die Berechnung folgende Metriken:

- Intent_Level_Score,

  o Der Intent_Level_Score dient dazu zu bewerten, wie groß die Übereinstimmung der virtuellen und/oder realen Editoren im Hinblick auf eine Zuordnung der Anfrage bezüglich eines bestimmten Intents ist. Je höher die Übereinstimmung der Editoren, desto höher ist der entsprechende Score TSintent. Ist $TS_{Intent}$ größer als ein vorher festgelegter Schwellenwert $TH_{Intent}$, wird davon ausgegangen, dass die Kategorisierung der Anfrage zu einem bestimmten Intent des virtuellen Assistenten mit einer ausreichenden Sicherheit als erfolgreich zu bewerten ist, sodass die Anfrage zu diesem Intent in dem Ground-Truth Datensatz hinzugefügt werden kann.

- Intent_Scoring_Metrik,

  ∘ ist eine Alternative Metrik zu dem Intent_Level_Score.

- Entity_Level_Score und/oder

  ∘ Der Entity_Level_Score dient dazu zu bewerten, wie groß die Übereinstimmung der virtuellen und/oder realen Editoren im Hinblick auf eine Zuordnung der Anfrage bezüglich einer bestimmten Entity ist. Je höher die Übereinstimmung der Editoren, desto höher ist der entsprechende Score $TS_{Entity}$. Ist $TS_{Entity}$ größer als ein vorher festgelegter Schwellenwert $TH_{Entity}$, wird davon ausgegangen, dass die Kategorisierung der Anfrage zu einem bestimmten Intent des virtuellen Assistenten mit einer ausreichenden Sicherheit als erfolgreich zu bewerten ist, sodass die Anfrage zu einer Entity dem Ground-Truth Datensatz hinzugefügt werden kann.

  ∘ Typischerweise wird hierbei hierarchisch vorgegangen, sodass zunächst der Intent einer Anfrage bestimmt wird und dann die Entity innerhalb dieses Intent. Es findet also zunächst eine grobe Kategorisierung statt, nämlich die Anfrage mit einem Intent zugeordnet, wobei nach der Ermittlung des Entity_Level_Scores diese Einteilung eventuell weiter verfeinert wird, in dem die Anfrage einer bestimmten Entity die innerhalb des Intent des Ground-Truth Datensatz hinzugefügt wird. In diesem Falle müssen also beide Scores größer sein als die zuvor festgelegten Schwellenwerte: $TS_{Entity} > TH_{Entity}$ UND $TS_{Intent} > TH_{Intent}$.

  ∘ Für den Fall, dass es in dem ersten Schritt Schwierigkeiten bereitet der Anfrage einen Intent zuzuordnen, hat es sich unter Umständen als vorteilhaft erwiesen die Reihenfolge der Auswertung umzukehren und zunächst der Anfrage eine Entity zuzuordnen und dann quasi einen Schritt rückwärts zu gehen und zu versuchen einen Intent für die Anfrage zu kategorisieren.

- Team/Annotator Confidence.

  ∘ Dieser Wert kennzeichnet, wie sehr sich die Editoren innerhalb eines Teams bei ihren Beurteilungen "einig" sind. Ein hoher "Einigkeit"-Wert einer solchen Gruppe von Editoren, erhöht die Wahrscheinlichkeit, dass ihre Kategorisierung richtig sind.

Im Prinzip können die vorgenannten Metriken in beliebiger Art und Weise miteinander kombiniert werden. Vorteilhaft wird durch sie eine Quantifizierung hinsichtlich der Güte der Kategorisierung der Anfragen bereitgestellt. Diese Qualifizierung ist vor allem dann vorteilhaft, wenn das Verfahren automatisiert entscheiden soll, ob eine Anfrage dem Ground-Truth Datensatz hinzugefügt werden soll oder nicht. Besonders vorteilhaft ist es, wenn hierzu für jede der verwendeten Metriken ein spezifischer Grenzwert festgesetzt wird, wobei jeder dieser Grenzwerte überschritten werden muss, damit die Anfrage zum Ground-Truth Datensatz hinzugefügt wird. Hierdurch wird es ermöglicht zu berücksichtigen, dass die Metriken die Anfragen "verschiedenartig" quantifizieren. Bevorzugt existiert bereits ein bestehendes minimales Set der Ground-Truth, sodass die Metrik verglichen werden können. Hierdurch können beim eigentlichen Annotation-Prozess den Editoren nicht nur neue Anfragen, sondern auch bereits Anfragen aus der Ground-Truth vorgelegt werden, um einen Confidence-Vote für jeden Editor zu berechnen. Diese Confidence kann für das gesamte Team in Abhängigkeit der Qualität und Quantität mithilfe von Fleiss' Kappe oder Krippendorf's Alpha berechnet werden. Hierbei spricht man von einem "inter-annotator agreement".

Weiterhin kann für jede Domain oder sogar jede Editor-Gruppe ein spezieller Grenzwert definiert werden. Das bieten den Vorteil, dass hierdurch die Annotationen je nach Wichtigkeit oder Sensibilität der Domäne spezifiziert werden können. Zum Beispiel: eine Banking Domain mit einem Geld-Überweisen User Case sollte einen sehr hohen Schwellenwert besitzen, um sicher zu gehen das die Intents+ Entities korrekt erkannt werden. Eine Music Domäne, um das Lieblingsradioabzuspielen kann einen niedrigen Schwellenwert besitzen.

Gemäß einem Ausführungsbeispiel der Erfindung wird der Ground-Truth Datensatz erweitert, indem automatisiert, basierend auf Wörterbüchern, Variationen der in dem Ground-Truth Datensatz befindlichen Anfragen hinzugefügt werden.

Dies bietet den Vorteil, dass hierdurch ein möglichst optimaler Kompromiss aus einem möglichst umfangreichen Ground-Truth Datensatz bereitgestellt wird, der zugleich nicht jegliche Variationen der Anfragen berücksichtigt und hierdurch das sogenannte Overfitting verhindert. Zudem kann das Verfahren vorteilhaft automatisiert ausgeführt werden, indem auf entsprechende Datenbanken zurückgegriffen wird. Zusätzlich zu den Wörterbüchern können auch Synonymlisten, grammatikalisch korrekte Anpassungen, Füllwörtern und oder Kombinationen berücksichtigt werden. Durch Verwendung von Wörtern aus Wörterbüchern wird zudem verhindert, dass "zu" persönliche Daten in den Ground-Truth gespeichert werden, wie etwa "Schalte das Licht in Annas Zimmer aus!"

Dies soll an einem Beispiel illustriert werden: die schon in dem Ground-Truth aufgenommene Utterance "Wie ist das Wetter in New York City?" Kann wie folgt modifiziert werden:

- Verwendung von Synonyme: "Wie ist das Wetter in Big Apple?";

- Wörterbuchanpassungen: "Wie ist das Klima in New York City?";

- Nutzung von Füllwörtern/andere Satzstruktur:

    ○ "Wie ist das Wetter in New York City, bitte?"

    ○ "Sag mir wie das Wetter in New York City ist."

- Kombinieren von Utterances: "Wie wird das Wetter in der Hauptstadt der USA?"

Gemäß einem zweiten Aspekt der Erfindung ist ein Datensatzgenerator angegeben, wobei der Datensatzgenerator zum Erzeugen eines vorstehend beschriebenen Ground-Truth Datensatzes eingerichtet ist und folgendes aufweist:

einen Daten-Inputkanal zum Empfangen der bereitgestellten Anfragen,

eine Rechnereinheit mit einem auf der Rechnereinheit implementierten Algorithmus, wobei der Algorithmus zum Ausführen des vorstehend beschriebenen Verfahrens eingerichtet ist;

einen Daten-Outputkanal, zum Übertragen der Anfragen, die zu dem Ground-Truth Datensatz hinzugefügt werden sollen. Bevorzugt werden die Anfragen beispielsweise auf der Rechnereinheit und/oder einen Server in einem Speichermodul als Ground-Truth Datensatz hinterlegt bzw. einem schon bestehenden Ground-Truth Datensatz hinzugefügt.

Der Datensatzgenerator bietet den Vorteil, dass durch ihn ein effektives technisches Mittel bereitgestellt wird, um dem erfindungsgemäßen Ground-Truth Datensatz zu erzeugen.

Gemäß einem dritten Aspekt der Erfindung wird der nach Vorgehen beschriebenen Verfahren erzeugte Ground-Truth Datensatz zum Trainieren von spezifischen Modellen des virtuellen Assistenten verwendet.

Dies bietet den Vorteil, dass die spezifischen Modelle des virtuellen Assistenten, die die Anfragen der Nutzer bearbeiten sollen, mittels eines möglichst fehlerfreien und umfassenden Ground-Truth Datensatz trainiert werden können. Bevorzugt weist der Ground-Truth Datensatz eine "optimierte Datensatzgröße" auf, sodass die Problematik einer Überanpassung der spezifischen Modelle vermieden wird.

Es ist ein weiterer Vorteil der Verwendung, dass nur wenige Variationen einer Utterance in der Ground-Truth als Basis Uttterance gespeichert werden (Kein Overfitting). Diese Basis Utterance wird dann durch den Datensatzgenerator für Test-Zwecke oder neue Modellgenerierung bereitgestellt.

Im Folgenden werden bevorzugte Ausführungsbeispiele der vorliegenden Erfindung unter Bezugnahme auf die begleitenden Figuren erläutert:

Fig. 1:   zeigt das erfindungsgemäße Verfahren zum Erzeugen des Ground-Truth Datensatzes.

Fig. 2:   zeigt die Verwendung des erfindungsgemäß erzeugten Ground-Truth Datensatzes zum Erzeugen neuer spezifische Funktionen für den virtuellen Assistenten.

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist.

An dieser Stelle sollen zunächst noch einmal einige Begriffe der Erfindung erläutert werden.

Intents und Entitäten sind den Fachmann auf dem Gebiet virtuellen Assistenten, insbesondere der virtuellen Sprachassistenten gebräuchliche Begriffe verwendet. Letztlich soll hierdurch ein hierarchischer Aufbau der Klassifizierungen innerhalb des Ground-Truth Datensatzes bezeichnet werden. Eine Entität kann prinzipiell mehreren Intents zugeordnet sein. Die richtige Entität wird durch den virtuellen Sprachassistenten eben dadurch aufgefunden, dass dieser zunächst die Anfrage hinsichtlich ihres Intents analysiert und kategorisieren. Ein weiterer Begriff in diesem Zusammenhang ist der der Domäne: eine Domäne ist Sammlung von Intents für einen bestimmten Use Case. Z.B. gibt es eine Domäne für TV; Smarthome, Wetter oder To-Do-List. Eine Entitiy besteht immer aus einen Typ und einen Value :"Wie ist das Wetter in New-York". Entity-Type: LOCATION; Entity-Value: New-York; Der Entity-Type ist dahingehend GLOBAL über alle Domänen definiert und somit einheitlich.

Unter einem Editor, der auch als Annotator bezeichnet wird, wird im Rahmen dieser Erfindung sowohl ein virtueller Editor als auch ein realer, also menschlicher, Editor verstanden, solange nicht speziell auf einen der beiden Alternativen Bezug genommen wird. Im Rahmen dieser Erfindung sind die Begriffe Entity und Entität als Synonyme zu betrachten. Für den Fachmann auf dem Gebiet der virtuellen Sprachassistenten sind beide Begriffe geläufig.

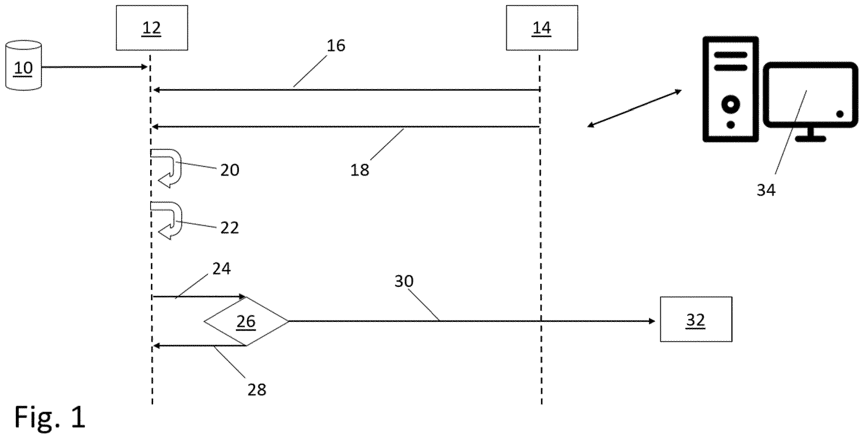

Fig. 1 zeigt das erfindungsgemäße Verfahren zum Erzeugen des Ground-Truth Datensatzes.

Aus einer Historie 10 von Nutzeranfragen an den virtuellen Assistenten werden Anfragen, insbesondere Audioelemente (Utterances) und/oder transkribierter Text, an einen Service zum Editieren 12 weitergeleitet. Insbesondere handelt es sich bei dem Anfragen um eine vorgefilterte Auswahl eine Gesamtmenge von Anfragen in der Historie 10. Dieser Service zum Editieren 12 wird von Editoren 14 durchgeführt. Die Editoren kategorisieren bzw. editieren die ihnen vorgelegten Anfragen. Vorliegend zeigt Fig. 1, dass sowohl reale Editoren 16 als auch virtuelle Editoren 18 die Anfragen editieren. Bevorzugt bilden diese Editoren 14, 16 eine Editoren-Gruppe aus, wobei insbesondere mehrere Editoren-Gruppen die Anfragen editieren können.

In Schritt 20 analysieren die Gruppen von Editoren jede einzelne Anfrage.

In Schritt 22 werden die Ergebnisse aus Schritt 20 quantifiziert, indem zumindest eine oder eine beliebige Kombination der folgenden Metriken verwendet wird:

- Intent_Level_Score;

- Intent_Scoring_Metric;

- Entity_Level_Score;

- Team/Annotator Confidence.

Nachstehend werden die einzelnen Metriken im Detail beschrieben.

Die Berechnung der Metriken ermöglicht es Werte zu errechnen, die mit zuvor definierten Schwellenwerten verglichen werden können. Die zuvor definierten Schwellenwerte werden so gewählt, dass neue Anfragen nur dann dem Ground-Truth Datensatz hinzugefügt werden, wenn mit hoher Wahrscheinlichkeit davon ausgegangen werden kann, dass diese Anfragen den bestehenden Ground-Truth Datensatz "verbessern".

Diese Ergebnisse werden also in Schritt 24 in den Entscheidungsprozess 26 übertragen. Der Algorithmus analysiert die Ergebnisse bezüglich einer jeden einzelnen Anfrage und entscheidet für jede einzelne Anfrage, ob diese in Schritt 28 verworfen wird oder in Schritt 30 dem Ground-Truth Datensatz 32 hinzugefügt wird. Überschreitet der für eine Anfrage berechnete Wert, also die errechnete Metrik, den vordefinierten Schwellenwert, so wird die Anfrage in Schritt 30 dem Ground-Truth Datensatz 32 hinzugefügt.

Zudem zeigt Fig. 1 eine Rechnereinheit 34 auf der das Verfahren durchführbar ist, insbesondere ist die Rechnereinheit 34 ein Datensatzgenerator 34. Die Rechnereinheit 34 weist die entsprechenden Kanäle zum Datentransfer auf, eine Prozessoreinheit auf der das Verfahren als ein Algorithmus implementiert ist und gegebenenfalls ein Speichermodul für den Ground-Truth Datensatz 32. Die Rechnereinheit 34 kann durch einen Server bereitgestellt sein.

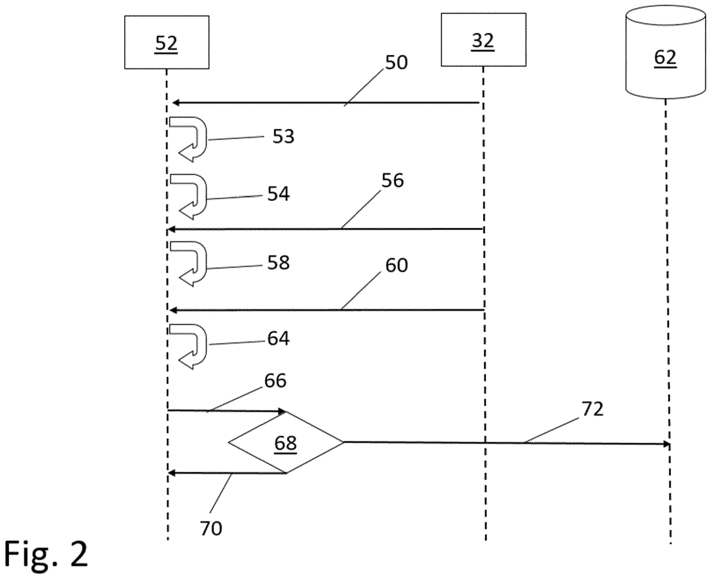

Fig. 2: zeigt die Verwendung des erfindungsgemäß erzeugten Ground-Truth Datensatzes zum Erzeugen neuer spezifische Funktionen für den virtuellen Assistenten. Hierdurch wird es ermöglicht, dass virtuelle Assistenten stetig verbessert werden und Anfragen von Nutzern besser beantworten können.

In Schritt 50 wird einem Lernservice 52 ein Datensatz aus dem Ground-Truth Datensatz 32 zum Lernen übergeben.

Dieser Datensatz kann in einem Schritt 53 nochmals adaptiert werden. Beispielsweise können in Schritt 53 Entitäten mit Synonymen und/oder bestehenden Wortlisten erweitert, ergänzt und/oder ersetzt werden. Zudem können Füllwörtern wie "danke", "bitte" hinzugefügt werden. Eine weitere Möglichkeit ist es die Sätze der Anfragen grammatikalisch zu restrukturieren: "Wie ist das Wetter in Darmstadt?", "In Darmstadt ist das Wetter, wie?". Zudem können verschiedene Utterances kombiniert werden.

In Schritt 54 startet das überwachte Lernen "supervised learning" basierend auf dem Datensatz, insbesondere basierend auf dem adaptierten Datensatz. In Schritt 56 besteht nochmals die Möglichkeit, die neuesten Änderungen des Ground-Truth Datensatzes 32 für das überwachte Lernen zu berücksichtigen. Als Ergebnis ergibt sich aus dem überwachten lernen ein neuestes "Machine Learning Model", das auf dem neuesten Ground-Truth Datensatz 32 basiert. Das Machine Learning Model stellt die spezifischen Funktionen bereit, die es ermöglichen Anfragen der Nutzer durch den virtuellen Assistenten zu beantworten.

In Schritt 58 wird dieses neueste Machine Learning Model in einem vorgegebenen Testszenario im Hinblick darauf getestet, wie zuverlässig das neueste Machine Learning Model die Anfragen von Nutzern beantwortet.

In Schritt 60 wird aus einer Datenbank 62 von Machine Learning Modellen ein anderes Machine Learning Model, insbesondere das gegenwärtig auf dem virtuellen Sprachassistenten implementierte Machine Learning Model, an dem Learnings Service 52 übertragen und dort ebenfalls in dem vorgegebenen Testszenario in Schritt 64 im Hinblick darauf getestet, wie zuverlässig dieses Machine Learning Model die Anfragen von Nutzern beantwortet.

Die Testergebnisse für das neueste Machine Learning Model sowie für das andere Machine Learning Model werden in Schritt 66 einem auf dem Learnings Service 52 implementierten Entscheidungsalgorithmus 68 übergeben. Zeigen die Testergebnisse, dass das neueste Machine Learning Model schlechter ist als das andere Machine Learning Model, so wird das neueste Machine Learning Model in Schritt 70 verworfen. Zeigen die Testergebnisse, dass das neueste Machine Learning Model besser ist als das andere Machine Learning Model, so wird das neueste Machine Learning Model in Schritt 72 in die Datenbank 62 übertragen und kann als zu verwendendes Modell für den virtuellen Assistenten implementiert werden. Der virtuelle Assistent weist nun ein Machine Learning Model auf, das auf dem erfindungsgemäß erzeugten Ground-Truth Datensatz 32 basiert und somit auch die neuesten Nutzeranfragen beantworten kann.

Nachstehend werden die für die Erfindung relevanten Metriken im Detail beschrieben:
Es kann vorkommen, dass sich die Editoren bei der Klassifizierung der Intents, der Entitäten - insbesondere inklusive der Entitäts-Values - und ob die korrekte Antwort ausgewählt wurde nicht einig sind. Es hat sich allerdings als vorteilhaft erwiesen, nur solche Klassifizierungen der Editoren in der Ground-Truth zu übernehmen, bei denen zumindest ein bestimmter Grad an Übereinstimmung besteht. Aus diesem Grund ist es zweckmäßig eine Metrik oder mehrere Metriken zu entwickeln, die es ermöglicht einen Grad an Übereinstimmung zwischen den Annotatoren zu quantifizieren. Diese Metriken können insbesondere in einer Granularität bis zu dem kleinsten Audioelement und/oder Textelemente ("single Utterance") berechnet werden.

Es sollte zudem berücksichtigt werden, dass sich Übereinstimmungen zwischen Editoren zeitlich, beispielsweise über einen Zeitraum von einer Woche, ändern können. Als mögliche KPIs (Key Performance Indikatoren) um dies zu beurteilen, sind sowohl das sogenannte Fleiss Kappa als auch das Krippendorf Alpha zweckmäßig. Dies ermöglicht es zu beobachten, ob sich die Übereinstimmung zwischen Editoren verändert. Dies kann beispielsweise dann passieren, wenn neue Editoren eingearbeitet werden, die sich im Laufe der Zeit verbessern. Eine angepasste Version des Fleiss' Kappa wird nachstehend beschrieben.

Im Allgemeinen gilt, dass die Audioelemente, die zum Ground-Truth hinzugefügt werden sollen, einen ersten und/oder einen zweiten unabhängigen Schwellenwert überschreiten sollen. Der erste Schwellenwert ist ein "Intent-inter-annotator-agreement-score"-Schwellenwert $TH_{intent}$, wobei "Intent-inter-annotator-agreement-score" nachstehend als "Intent-Score" abgekürzt wird. Der zweite Schwellenwert ist ein "Entity-Entity-Value inter-annotator-agreement-score" $TH_{Entity}$, wobei der "Entity-Entity-Value inter-annotator-agreement-score" nachstehend als "Entity-Score" bezeichnet wird. Es ist von Vorteil, die Schwellenwerte auf eine Art zu implementieren, dass diese mittels APIs, also Anwendungsprogrammierschnittstellen, verändert werden können. Zudem ist es zweckmäßig, die Anzahl der Annotatoren, auch als Editoren bezeichnet, flexibel vorsehen zu können. Insbesondere kann die Anzahl der virtuellen Editoren auch über APIs verändert werden. Als zweckmäßig hat sich hierbei beispielsweise die Anzahl von 8 Annotatoren erwiesen.

Die Berechnung des "Intent-Scores" $TS_{Intent}$, der mit dem vordefinierten Schwellenwert $TH_{Intent}$ verglichen wird, wird nachstehend erläutert.

Die Berechnung des "Entity-Scores" $TS_{Entity}$, der mit dem vordefinierten Schwellenwert $TH_{Entity}$ verglichen wird, wird nachstehend erläutert.

Ein Audiosignal wird bevorzugt dann Ground-Truth hinzugefügt, wenn acht Annotatoren das Audiosignal beurteilt haben und wenn gilt $TS_{intent} > TH_{intent}$ und/oder $TS_{Entity} > TH_{Entity}$.

Zunächst eine Metrik beschrieben, die es ermöglicht die Übereinstimmung unter den Editoren zu quantifizieren. Bevorzugt ist diese Metrik eine kontinuierliche Skala zwischen 0, keine Übereinstimmung, und 1, eine vollständige Übereinstimmung, für eine Mehrzahl von Editoren, wobei ebenfalls NA, keine Klassifizierung, Werte berücksichtigt werden.

Dies soll anhand von Beispielen erläutert werden. Ein "dominierender/wahrscheinlicherer" Intent zeigt sich darin, dass hinsichtlich dieses Intents eine höhere Übereinstimmung zwischen den Editoren vorliegt. Zur vereinfachten Darstellung werden vorliegend 4 anstatt der bevorzugten 8 Editoren verwendet.

| Tabelle 1 | Editor 1 | Editor 2 | Editor 3 | Editor 4 | Score |
|---|---|---|---|---|---|
| Intent Annotation 1 | A | A | B | C | Teilweise Übereinstimmung |
| Intent Annotation 2 | A | A | B | B | Keine Übereinstimmung |

In Tabelle 1 ist gezeigt, dass bei der Intent Annotation 1 angenommen wird, dass eine höhere Übereinstimmung vorliegt als bei der Intent Annotation 2, wo es nicht klar ist, ob es sich um den Intent A oder den Intent B handelt.

Fehlende Annotationen "NA-values" resultieren in einer geringeren Übereinstimmung als übereinstimmender Annotationen, haben aber einen höheren Score als eine Amputation eines anderen Intents - dies zeigt Tabelle 2.

| Tabelle 2 | Editor 1 | Editor 2 | Editor 3 | Editor 4 | Score |
|---|---|---|---|---|---|
| Intent Annotation 1 | A | A | A | A | Komplette Übereinstimmung |
| Intent Annotation 2 | A | A | A | NA | Sehr hohe Übereinstimmung |
| Intent Annotation 3 | A | A | A | B | Übereinstimmung |

Die Metrik für die Übereinstimmung der Editoren kann wie folgt berechnet werden:

- Normalisieren der Übereinstimmung ("Normalized agreement score (Reihe)")

    ○ Reihe = $\{Votum_e\}$;
    ○ e ist ein Editor (e = 1, ..., $n_{Editor}$);
    ○ $Votum_e$ ist ein Intent i (i = 1, ..., $n_{Intents}$);

Beispiel-Ergebnis 1: {Editor1: "Intent A", Editor2: "Intent A", Editor3: "Intent B", Editor4: "Intent C", Editor5: "Intent A"};
- Konvertierung zu einer Zähltabelle

    ○ $CT_i := sum(Vote_e == i)$;
    ○ angewendet auf das Beispiel-Ergebnis 1 ergibt dies Beispiel-Ergebnis 1.1: {Intent A = 3, Intent B = 1, Intent C = 1}

- Identifiziere das häufigste Intent

    ○ max intent := $argmax(CT_i)$
    ○ angewendet auf das Beispiel-Ergebnis 1.1 ergibt dies Beispiel-Ergebnis 1.2: Intent A;

- Berechnung des "Anteilswerts" PPS

    ○

$$PPS := CT_{max\_intent} / n_{Editor}$$

    ○ Also: 3/5 = 0,6;

- Berechnung übereinstimmender Intent-Paare AP pro Intent i:

    ○

$$AP_i = CT_i * (CT_i - 1) / 2;$$

o Also: Editor1 - Editor2 = A; Editor1 - Editor3 = /; Editor1 - Editor4 = /; Editor1 - Editor5 = A; Editor2 - Editor3 = /;

■ Also: A=3; B= 0; C= 0;

o Also: APa, = 3*(3-1)/2 = 3; $AP_B$ = 1*(1 -1) /2 = 0; APc = 1*(1-1) /2 = 0;

• Berechnung der Summer der übereinstimmenden Intent-Paare AP pro Intent i:

o Also: $AP_{SUM}$ = sum(APi) = $AP_A$ + APs + APc = 3;

• Berechnug des maximalen Pairing-Scores für $n_{Editoren}$:

o

$$AP_{MAX} = n_{Editoren} * (n_{Editoren} - 1) /2;$$

o Also: $n_{Editoren}$ = 5 → $AP_{MAX}$ = 10;

• Berechnung des "agreesing pairs score" APS

o If not sum(APi) == 0; then

■

$$APS := AP_{SUM} / AP_{MAX} = 3/10 = 0,3;$$

• Berechnung (total)"Intent-Scores" $TS_{Intent}$

o

$$TS_{Intent} := (APS + PPS) * 0,5$$

o Also: (0,3 + 0,6) * 0,5 = 0,45;

Die Metrik $TS_{Intent}$ ergibt einen Wert zwischen 0 und 1 und kann mit dem Schwellenwert $TH_{Intent}$ wie vorstehend erläutert verglichen werden.
Weitere Metriken können zur Quantifizierung berechnet werden.
Eine dieser weiteren Metriken ist die sogenannte "Intent_Scoring_Metrik", die einen normalisierten Übereinstimmungswert angibt und nachfolgend beschrieben wird:

o Reihe = {$Votum_e$};
o e ist ein Editor (e = 1, ..., $n_{Editor}$);
o $Votum_e$ ist ein Intent i (i = 1, ..., $n_{Intents}$);

Beispiel-Ergebnis 2: {Editor1: "Intent A", Editor2: "Intent A", Editor3: "Intent B", Editor4: "Intent C", Editor5: "Intent A"};
Eine globale Metrik für das "Vertrauen-zwischen-Editoren" wird berechnet:
Berechne separat die "Mean-Annotation-Confidence" in Bezug auf den Intent, die Entity und den Entity Value:

• p($Intent_{global}$) = mean($n_{max\_intent}$/$n_{editors}$) berechne über >1000 utterances → z.B. p($Intent_{global}$) = 3/5;
• p($Entity_{global}$) = mean($n_{max\_Entity}$/$n_{editors}$) berechne über >1000 utterances;
• p($Entity\_value_{global}$) = mean($n_{max\_Entity\_value}$/$n_{editors}$) berechne über >1000 utterances;

Berechne für ein spezifisches Audioelement die erwartete Anzahl an Übereinstimmung der Editoren bezüglich eines Intents:

- Berechnen Sie den Erwartungswert der Anzahl der zustimmenden Editoren, wenn $n_{editors}$ das Audioelement bewerten, unter der Annahme, dass die Anzahl der zustimmenden Annotatoren einer Binomialverteilung folgt → $E(X=N)=5*p(Intent_{global})$; also z.B. 4 von 5 Editoren stimmen hinsichtlich des Audioelements oder des Textelements überein: $E(X=N)=5*p\ 3/5 = 3$;
- Die erwartete Anzahl der übereinstimmenden Editoren wird getrennt für Entity und Entity Value gemäß ihrer individuellen Binomialverteilungen berechnet.

Eine für das Audioelement spezifische Metrik wird für die Übereinstimmung zwischen den Editoren berechnet (prozentuale paarweise Editorenübereinstimmung):

- Berechne übereinstimmende Intent-Paare pro Intent:

  ○

$$AP_i = CT_i * (CT_i - 1) / 2;$$

  ○ Also: Editor1 - Editor2 = A; Editor1 - Editor3 = /; Editor1 - Editor4 = /; Editor1 - Editor5 = A; Editor2 - Editor3 = /;

    ▪ Also: A=3; B= 0; C= 0;

  ○ Also: APa, = 3*(3-1)/2 = 3; $AP_B$ = 1*(1-1) /2 = 0; APc = 1 *(1-1) /2 = 0;

- Berechne Sie Summe der beobachteten paarweisen Übereinstimmungen

  ○

$$AP_{SUM} = sum(AP_i) = AP_A + AP_B + AP_C = 3;$$

- Berechne die maximale Anzahl der übereinstimmenden Editoren-Paare:

  ○

$$max\_pairs = n_{editoren}*(n_{editoren}-1)//2$$

  o z.B. insgesamt 5 Editoren ==> max_pairs = 5*(5-1)/2 = 10;

- Berechne die prozentuale paarweise Übereinstimmung der Editoren

  o pct_agreement = sum_AP/ max_pairs, also z. B. pct_agreement = 3/10 = 0,3;

  o

Berechne die Gesamtkonfidenzschwelle für das kommentierte Audioelement von Interesse

- Die erwartete Anzahl von übereinstimmenden Editoren (wie aus der Binomialverteilung erhalten) wird mit dem Ausmaß der Uneinigkeit zwischen den Editoren bezüglich des spezifischen Audioelements multipliziert
- Schwellenwert = $E(X=N)_{binomial}$ * (1-pct_agreement);
- Je höher der erwartete Wert der zustimmenden Editoren (wenn es X stimmberechtigte Editoren gibt), desto höher ist der Schwellenwert;
- Je niedriger der pct_agreement ist, desto höher ist der Schwellenwert;
- Je höher der pct_agreement ist, desto niedriger ist der Schwellenwert;
- z. B. beobachtete Anzahl zustimmender Editoren = 3; Gesamtzahl abstimmender Annotatoren = 5 ==>Schwellenwert = E(X=5) * (1-0,3) = 3*0,7 = 2,1;

- Da die Anzahl der zustimmenden Annotatoren 3 ist ==> 3 > 2.1 => die Äußerung wird zur Ground-Truth hinzugefügt. (in Beispiel 1 gibt es eine niedrige p(INTENTglobal) = 3/5 Wertung - für einen höheren globalen Intent-Score siehe Beispiel 2.

Beispiel 2: gleiche Äußerung mit gleicher Editor-Anmerkung:

- z. B. {Editor1: "Intent A", Editor2: "Intent A", Editor3: "Intent B", Editor4: "Intent C", Editor5: "Intent A"};
- Aber ein höheres globales Annotator-Vertrauen $p(INTENT_{global})$ = 5/6 Score;
- → Gleicher pct_agreement, aber unterschiedliche erwartete Anzahl von zustimmenden Editoren:
-

$$E(X=5) = N* p(INTENT_{global}) = 5 * 6/7;$$

- Es wird ein anderer Schwellenwert berechnet: Schwellenwert = E(X=5) * (1-0,3) = 4,3*0,7= 3,0 --> 3 !> 3 --> das Audioelement wird nicht in der Ground-Truth gespeichert;

Weitere Metriken können zur Quantifizierung berechnet werden.
Eine dieser weiteren Metriken ist der sogenannte "Entity_Level_Score", der nachfolgend beschrieben wird: Entity-Vereinbarung: Final - Ausgewählte Metrik für die Entity Ebene "inter-annotator-agreement": "Entitäts- und Entitätswert-Übereinstimmung für eine einzelne Äußerung (basierend auf einem Entropie-Score)".

Beispiel:

Audiosignal: "Schalte TV auf nächsten Sender"

| Editor | Entity Type | Entity Value |
|--------|-------------|--------------|
| A | Gerät | TV |
| A | Richtung | nächster |
| B | Station | TV |
| C | Gerät | TV |
| D | Gerät | TV |
| D | Richtung | nächster |
| E | Richtung | auf nächsten |
| Entitiy = Entity Type + Entitiy Value | | |

1.) Berechne für jedes Token die Häufigkeit der einzelnen Entitäten pro Token: z. B.

- Token-TV: f(Gerät) = 3/4; f(Sender) = 1/4;

- Token-nächsten: f(Richtung) = 3/3 = 1;

- Token-auf: f(Richtung) = 1/1 = 1;

2.) Berechne für jedes Token die Cross-Entropie über alle Entitäten, die Cross-Entropie für Token ohne Annotationen ist 0:

- cross-entropy-Schalte = 0;

- cross-entropy-TV = -

sum[f(Gerät)*log(f(Gerät) + f(Station)*log(f(Station))]=

- sum[(3/4)*log(3/4) + (1/4)*log(1/4)] = 0,24;

- cross-entropy-auf = -sum[ f(auf)*log(f(auf)) = -sum[ 1*log(1) ] = 0;

- cross-entropie-nächsten = -sum[f(nächsten)*log(f(nächsten))] = - sum[3/3*log(3/3) ] = -sum[1 *log(1)] = 0;

- cross-entropie-Sender = 0;

3.) Berechne die Summe aller "cross-entropien" für jedes Token und dividiere durch die Anzahl der Token:

- sum_of_cross_entropy = sum(cross_entropies_per_utterance) = cross-entropy-Schalte + cross-entropy-TV + cross-entropy-auf + cross-entropy-nächsten + cross-entropy -Sender = 0 + 0,24 + 0 + 0 + 0 + 0 = 0,24;

- durchschnittliche "cross-entropy" für die gesamte Äußerung: avg_entropy = sum_of_cross_entropy /Anzahl_der_Tokens = 0,24/5 = 0,05;

4.) Wandle den Entropie-Score in einen Übereinstimmungs-Score zwischen 0 und 1 um:

- entity_token_agreement_score = 1 - avg_entropy = 1-0,05 = 0,95;

5.) Berechne die Entropie der Anzahl der Token pro Entität, die von den Editoren ausgewählt wurden:

- Berechne für jede Entität die Häufigkeit der Anzahl der Token pro Entität:

  ◦ z. B. Entität-Gerät:

  ◦ entity-Gerät: f(Gerät: 1 Token= TV) = 3/3= 1;

  ◦ entity-Richtung: f(Richtung: 1 token=nächsten) = 2/3, f(Richtung: 2 tokens = auf nächsten) = 1/3;

  ◦ entity-Station: f(Station: 1 Token=TV) = 1/1 = 1;

6.) Berechne die cross_entropy für jede Entity:

- entropy-Gerät = -sum[f(Gerät: 1 Token= TV)*log( f(Gerät: 1 Token= TV))] = -(1 *log(1)) = 0;

- entropy-Richtung = -sum[f(Richtung: 1 token=nächsten)*log(f(Richtung: 1 token=nächsten)) + f(Richtung: 2 Token = auf nächsten)*log(f(Richtung: 2 Token = auf nächsten)) ] = -sum[2/3 * log(2/3) + 1/3* log(1/3)] =0,28;

- 

entropie-Station = -sum[ f(Station: 1 token=TV) * log( f(Station: 1 token=TV)) ] = -(1 *log(1) = 0;

7.) Berechne die gesamte Token_Anzahl-Entropie:

- 

token_number_entropy = sum(entropy$_N$) = entropy-Gerät + entropy- Richtung + entropy-Station = 0 + 0.28 + 0 = 0.28;

8.) Berechne den Wert für die Token Anzahl-Übereinstimmung:

- 

Token_Anzahl_Übereinstimmung = 1- Token_Anzahl_Entropie = 1- 0,28 = 0,72;

9.) Berechne den Gesamtscore für Entity-Entity-Value-Übereinstimmung zwischen Annotatoren:

- 

$$TS_{entity} = (\text{entity\_token\_agreement\_score} +$$

$$\text{token\_number\_agreement})/2 = (0,95 + 0,72)/2 = 0,84;$$

10.) Übertrage Utterance in die Ground-Truth, wenn (TS$_{entity}$ > TH$_{entity}$), insbesondere, wenn zusätzlich gilt TS$_{Intent}$ > THntent.

Weitere Metriken können zur Quantifizierung berechnet werden.

Eine dieser weiteren Metriken ist der sogenannte "Scoring_Metrik": "normalisierter Übereinstimmungswert (basierend auf einer einzelnen Utterance)". Dies ist eine Metrik zur Messung der Übereinstimmung zwischen den Editoren für die Entitäten.

Betrachte jedes Audioelement, also jede Utterance, als ein Thema, über das die Editoren abgestimmt haben.

- Eingabe: (Audioelement/Utterance, Schlüssel-Werte-Paare)

  ◦ z. B. Äußerung: "Wie ist morgen das Wetter in New York";

  ◦ z. B. Schlüssel-Wert-Paare: [Editor1: {(nuance_CALENDARX, "morgen"), (location, "New York")}, Editor2: {("morgen", nuance_CALENDARX)}, ..., Editor5: {("morgen", nuance_CALENDARX), ("Wetter", weather_condition)}]

  ◦ Editor-Index: e = 1, ..., n$_{Editor}$;

  ◦ KVP$_{ej}$: (key$_{ej}$, val$_{ej}$) (Schlüssel-Wert-Paar j des Editors e);

  ◦ vals := {val$_{ej}$} (alle Werte, wie von den Editoren für diese Utterance angegeben);

  ◦ keys := {key$_{ej}$} (alle Werte, die von den Editoren für diese Utterance angegeben wurden);

1. Tokenisierung der Utterance unter Verwendung der von den Editoren angegebenen Werte

- z. B. "Wie ist morgen das Wetter in New York" "Wie", "ist", "morgen", "das", "Wetter", "in", "New York";

- tokens := tokenize(Utterance, Werte);

- tokeni (i-tes Token in Utterance);

2. Token filtern, die nicht kommentiert wurden

- tokens := intersect(tokens, vals);

3. Hinzufügen von Schlüssel-Wert-Paaren zu Editoren für Token, die sie nicht mit dem Schlüssel "no_entity" annotiert haben:

- for e in range($n_{editor}$):

  ◦ missing_tokens := intersect($\{val_{ej}\}$, tokens);

  ◦ $KVP_{em}$:= ("keine_Einheit", fehlende_Tokens$_m$) form = 1,...,len (fehlende_Tokens);

- z. B. das Schlüssel-Wert-Paar (no_entity, "Wetter") muss in diesem Fall für alle Editoren außer Editor 5, der (wahrscheinlich) fälschlicherweise "Wetter" als Entität identifiziert hat;

4. Berechne normalized_agreement_score für jedes Token und bilde den Mittelwert

- score := 0;

- score += normalized_agreement_score($\{val_{ej}\}$) for j = 1,...,len(vals);

- score /= len(tokens);

5. Rückgabe von Score

- return score;

Handhabung von Annotationsdienst-Flags

Z. B. für fehlende Werte, falsche Grammatik usw. können die Editoren ein Flag setzen (Klick auf die Checkbox). Während die Checkbox derzeit als boolescher Wert (TRUE, FALSE, NULL) behandelt wird, müssen alle Flag-Werte als kontinuierliche Werte zwischen 0-1 für die Äußerungen definiert werden, die in die Ground-Truth transferiert werden.
Der kontinuierliche Wert entspricht dem Verhältnis von gesetzten Flags zu wahrer Anzahl von Annotatoren, die die Äußerung annotiert haben.

- Wenn number_of_flag == 0: dann wird der zurückgegebene Wert auf NULL gesetzt (da das völlige Fehlen von Flags entweder bedeuten könnte, dass alle Annotatoren das Flag auf FALSE belassen haben, weil sie sich nicht sicher sind, ob sie das Flag setzen sollen, oder alle Annotatoren das Flag bewusst abgewählt haben).

- Sonst: pct_flag_selected = anzahl_der_flag_TRUE/annotatoren return pct_flag_selected

  → der resultierende Flag-Wert, der in der Ground-Truth verfügbar ist, kann 0<pct_flag_selected<=1 oder NULL sein.

Behandlung fehlender Werte:

Einige Annotationen könnten von Annotatoren übersehen worden sein. Es kann aber auch - insbesondere bei der Entity-Annotation - vorkommen, dass ein Annotator einem Token absichtlich keine Entität zugewiesen hat. Eine einfache Lösung ist, den normalisierten Übereinstimmungswert zweimal zu berechnen und den Mittelwert zu nehmen. Einmal indem die fehlenden Werte entfernt werden, was zu einer geringeren Anzahl von Annotatoren führt, was die Punktzahl ein wenig erhöht. Und ein zweites Mal, wenn die fehlenden Werte entsprechend ersetzt werden. Im Falle der Intent-Annotation würde dies zu einem "NO_INTENT_ANNOTATED"-Intent führen, im Falle der Entity-Annotation führt dies zu Schlüssel-Wert-Paaren für die fehlenden Annotatoren, wobei jeder Schlüssel "no_entity" ist.

Intents zuordnen:

Der Inter-Annotator-Übereinstimmungswert für Intents ist so konzipiert, dass es für Werte größer als 0 einen "dominierenden" Intent gibt - einen Intent den die meisten Annotatoren der jeweiligen Äußerung zuordnen. Dieser Intent gilt als übereinstimmend, wenn die Punktzahl einen definierten Schwellenwert überschreitet und kann daher der Äußerung zugeordnet werden.

**Patentansprüche**

1. Verfahren zum Erzeugen eines Ground-Truth Datensatzes für einen virtuellen Assistenten, wobei die Elemente des Ground-Truth Datensatzes mögliche Nutzeranfragen an den virtuellen Assistenten umfassen, wobei das Verfahren zumindest teilweise auf einer Rechnereinheit ausführbar ist und die folgenden Schritte umfasst:

   • Bereitstellen von Anfragen von Nutzern an die Recheneinheit, wobei es sich hierbei um Anfragen handelt die für den virtuellen Assistenten bestimmt sind, respektive waren;
   • Analysieren der Anfragen im Hinblick auf eine Eignung für eine Aufnahme in die Ground-Truth Daten; wobei die Analyse von zumindest zwei virtuellen Editoren vorgenommen wird, wobei jeder der virtuellen Editoren für jede Anfrage ein eigenes Analyseergebnis erstellt;
   • Implementieren von Mitteln zur Bewertung der Analyseergebnisse auf der Recheneinheit, wobei die Mittel zur Bewertung einen Wert TS berechnen der eine Wahrscheinlichkeit repräsentiert, dass die Anfrage für den Ground-Truth Datensatz geeignet ist, wobei die Berechnung basierend auf den Analyseergebnissen der zumindest zwei virtuellen Editoren für die jeweilige Anfrage durchgeführt wird;
   • Vergleichen des berechneten Wertes TS mit einem vordefinierten Schwellenwert TH;
   • Hinzufügen der Anfrage in den Ground-Truth Datensatz, wenn der berechnete Wert TS größer ist als der Schwellenwert TH,

   **dadurch gekennzeichnet,**
   **dass** die virtuellen Editoren durch eine künstliche Intelligenz realisiert werden, die auf Basis der Eingabe menschlicher Editoren trainiert wurde, insbesondere wurde ein virtueller Editor nur basierend auf den Eingaben eines einzelnen menschlichen Editors trainiert.

2. Verfahren nach Anspruch 1, **dadurch gekennzeichnet, dass** die Anfragen aus einer Historie von realen Nutzeranfragen entnommen werden, die in einer Datenbank hinterlegt sind.

3. Verfahren nach einem der vorhergehenden Ansprüche, **dadurch gekennzeichnet, dass** Mittel zum Filtern von Anfragen auf der Recheneinheit und/oder einem Server implementiert sind, wobei die bereitgestellten Anfragen eine gefilterte Teilmenge einer Gesamtmenge von realen Nutzeranfragen sind.

4. Verfahren nach Anspruch 3, **dadurch gekennzeichnet, dass** die Mittel zum Filtern Nutzeranfragen mit folgendem Tags herausfiltern:
   unzureichende Qualität des Audiosignals, Länge des Audiosignals zu lange oder zu kurz und/oder keine Antwort des Nutzers.

5. Verfahren nach einem der vorhergehenden Ansprüche, **dadurch gekennzeichnet, dass** die Anfragen auf eine Texteingabe oder einer Spracheingabe basieren.

6. Verfahren nach einem der vorhergehenden Ansprüche, **dadurch gekennzeichnet, dass** der Schwellenwert und/oder eine Anzahl der virtuellen Editoren durch entsprechend eingerichtete APIs verändert werden.

7. Verfahren nach einem der vorhergehenden Ansprüche, **dadurch gekennzeichnet, dass** die Anfragen zusätzlich von menschlichen Editoren im Hinblick auf eine Eignung für eine Aufnahme in die Ground-Truth Daten analysiert werden.

8. Verfahren nach einem der vorhergehenden Ansprüche, **dadurch gekennzeichnet, dass** eine künstliche Intelligenz der virtuellen Editoren mit verschiedenen Modellen und/oder verschiedenen Parametern trainiert wird.

9. Verfahren nach einem der vorhergehenden Ansprüche, **dadurch gekennzeichnet, dass** die virtuellen Editoren, insbesondere, wenn ein neuer Ground-Truth Datensatz erzeugt wurde, regelmäßig upgedatet werden.

**10.** Verfahren nach einem der vorgehenden Ansprüche, **dadurch gekennzeichnet, dass** der erzeugte Ground-Truth Datensatz zum Trainieren von spezifischen Modellen des virtuellen Assistenten verwendet wird.

**Claims**

**1.** A method for generating a ground truth data set for a virtual assistant, wherein the elements of the ground truth data set comprise possible user queries to the virtual assistant, wherein the method can be executed at least partially on a computer unit and comprises the following steps:

• Providing queries from users to the computer unit, wherein said queries are such as are or were intended for the virtual assistant;
• Analysing the queries with regard to their suitability for inclusion in the ground truth data; wherein the analysis is performed by at least two virtual editors, wherein each of the virtual editors prepares its own analysis result for each query;
• Implementing means for evaluating the results of analysis on the computer unit, wherein the means for evaluating calculate a value TS that represents a probability that the query is suitable for the ground truth data set, wherein the calculation is carried out based on the results of analysis of the at least two virtual editors for the respective query;
• Comparing the calculated value TS with a predefined threshold value TH;
• Adding the query to the ground truth data set if the calculated value TS is greater than the threshold TH,

**characterized in that**
the virtual editors are implemented by an artificial intelligence which was trained based on the input of human editors, in particular a virtual editor was only trained based on the inputs of a single human editor.

**2.** The method according to Claim 1, **characterized in that** the queries are taken from a history of real user queries which have been stored in a database.

**3.** The method according to one of the preceding claims, **characterized in that** means for filtering queries are implemented on the computer unit and/or a server, wherein the queries provided are a filtered subset of a total set of real user queries.

**4.** The method according to Claim 3, **characterized in that** the means for filtering filter out user queries that have the following tags:
poor quality of the audio signal, length of the audio signal too long or too short, and/or no response from the user.

**5.** The method according to any one of the preceding claims, **characterized in that** the queries are based on text input or voice input.

**6.** The method according to any one of the preceding claims, **characterized in that** the threshold value and/or a number of the virtual editors are changed by correspondingly configured APIs.

**7.** The method according to any one of the preceding claims, **characterized in that** the queries are additionally analysed by human editors with regard to suitability for inclusion in the ground truth data.

**8.** The method according to any one of the preceding claims, **characterized in that** an artificial intelligence of the virtual editors is trained with various models and/or various parameters.

**9.** The method according to any one of the preceding claims, **characterized in that** the virtual editors are updated regularly, particularly when a new ground truth data set has been generated.

**10.** The method according to any one of the preceding claims, **characterized in that** the ground truth data set generated is used for training specific models of the virtual assistant.

**Revendications**

1.  Procédé de génération d'un ensemble de données de vérité de terrain pour un assistant virtuel, dans lequel les éléments de l'ensemble de données de vérité de terrain comprend d'éventuelles requêtes des utilisateurs à l'assistant virtuel, dans lequel le procédé est exécutable au moins partiellement sur une unité informatique et comprend les étapes suivantes consistant à :

    • fournir des requêtes des utilisateurs à l'unité informatique, qui sont déterminées comme des requêtes pour les assistants virtuels, respectivement étaient ;
    • analyser les requêtes pour déterminer leur aptitude à être incluses dans les données de vérité de terrain ; dans lequel l'analyse est entreprise par au moins deux éditeurs virtuels, dans lequel chacun des éditeurs virtuels établit son propre résultat d'analyse pour chaque requête;
    • mettre en œuvre des moyens d'évaluation des résultats d'analyse sur l'unité informatique, dans lequel les moyens d'évaluation calculent une valeur TS qui représente une probabilité que la requête convient à l'ensemble de données de vérité de terrain, dans lequel le calcul est effectué sur la base des résultats d'analyse des au moins deux éditeurs virtuels pour la requête respective ;
    • comparer la valeur calculée TS avec une valeur seuil prédéfinie TH ;
    • ajouter la demande à l'enregistrement de vérité de terrain si la valeur calculée TS est supérieure à la valeur seuil TH,

    **caractérisé en ce que** les éditeurs virtuels sont réalisés par une intelligence artificielle, qui a été entraînée sur la base des contributions d'éditeurs humains, en particulier un éditeur virtuel a été entraîné sur la seule base de la contribution d'un seul éditeur humain.

2.  Procédé selon la revendication 1, **caractérisé en ce que** les requêtes sont extraites d'un historique de requêtes d'utilisateurs réelles, qui sont stockées dans une base de données.

3.  Procédé selon une des revendications précédentes, **caractérisé en ce que** des moyens de filtrage des requêtes sont mis en œuvre sur l'unité informatique et/ou un serveur, dans lequel les requêtes fournies constituent un sous-ensemble filtré d'un ensemble total de requêtes d'utilisateurs réelles.

4.  Procédé selon la revendication 3, **caractérisé en ce que** les moyens de filtrage filtrent les requêtes des utilisateurs avec les balises suivantes : qualité du signal audio insuffisante, longueur du signal audio trop longue ou trop courte et/ou absence de réponse de l'utilisateur.

5.  Procédé selon une des revendications précédentes, **caractérisé en ce que** les requêtes sont basées sur une saisie textuelle ou une saisie vocale.

6.  Procédé selon une des revendications précédentes, **caractérisé en ce que** la valeur seuil et/ou un nombre d'éditeurs virtuels sont modifiés par des API configurées de manière appropriée.

7.  Procédé selon une des revendications précédentes, **caractérisé en ce que** les requêtes sont également analysées par des éditeurs humains en ce qui concerne leur aptitude à être inclus dans les données de vérité de terrain.

8.  Procédé selon une des revendications précédentes, **caractérisé en ce qu'**une intelligence artificielle des éditeurs virtuels est entraînée avec différents modèles et/ou différents paramètres.

9.  Procédé selon une des revendications précédentes, **caractérisé en ce que** les éditeurs virtuels, notamment si un nouvel ensemble de données de vérité de terrain a été créé, doivent être mis à jour régulièrement.

10. Procédé selon une des revendications précédentes, **caractérisé en ce que** l'ensemble de données de vérité de terrain généré est utilisé pour entraîner des modèles spécifiques des assistants virtuels.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- An active approach to spoken language processing. **DILEK HAKKANI-TUR et al.** ACM TRANSACTIONS ON SPEECH AND LANGUAGE PROCESSING (TSLP). ASSOCIATION FOR COMPUTING MA-CHINERY, INC, 01. Oktober 2006, vol. 3, 1-31